# EUROPÄISCHE PATENTANMELDUNG

(11) **EP 2 194 547 A1**
(43) Veröffentlichungstag der Anmeldung: **09.06.2010**
(21) Anmeldenummer: 09178020.5
(22) Anmeldetag: 04.12.2009
(51) Int. Cl.: H01G 2/14, H02H 7/16

(54) **Energiespeichereinrichtung**

(30) Priorität: 04.12.2008 DE 102008062656
(71) Anmelder: Stribel Production GmbH, 72636 Frickenhausen (DE)
(72) Erfinder: Jeuck, Marc, 77 815 Bühl (DE); Everett, Michael A., Falbrocok, CA 92028 (US)
(74) Vertreter: Rupprecht, Kay

(57) **Zusammenfassung**

Um eine Energiespeichereinrichtung umfassend eine Wandlereinheit und einen mit der Wandlereinheit zusammenwirkenden Kondensatormodul, derart zu verbessern, dass diese als reales Gerät, insbesondere in einem Kraftfahrzeug, einsetzbar ist, wird vorgeschlagen, dass ein Kondensatorzellen des Kondensatormoduls aufnehmendes Gehäuse vorgesehen ist, dass das Gehäuse eine die Kondensatorzellen aufnehmende Kondensatorkammer aufweist, dass die Kondensatorkammer druckdicht abgeschlossen ist und dass ein Innendruck der Kondensatorkammer durch einen Drucksensor erfassbar ist.

## Beschreibung

Die Erfindung betrifft eine Energiespeichereinrichtung umfassend eine Wandlereinheit und einen mit der Wandlereinheit zusammenwirkenden Kondensatormodul.

Derartige Energiespeichereinrichtungen, insbesondere für Bordnetze von Kraftfahrzeugen, sind aus dem Stand der Technik bekannt, wobei bei diesen die tatsächliche Integration in das Kraftfahrzeug nicht gelöst ist.

Die DE 10 2005 018 339 A1 beispielsweise offenbart eine Energiespeichereinrichtung mit diversen Kondensatoren, die sich in einer druckdicht abgeschlossenen Kondensatorkammer befinden, deren Innendruck durch einen Drucksensor erfassbar ist. Die Energiespeichereinrichtung liefert die gespeicherte Energie an ein Antriebssystem eines Schienenfahrzeuges. Aufgrund des Einsatzes im Bereich der Schienenfahrzeuge ist die Energiespeichereinrichtung wenig kompakt, so dass ihre Verwendung im Bereich von Kraftfahrzeugen Probleme bereitet.

Der Erfindung liegt daher die Aufgabe zugrunde, eine Energiespeichereinrichtung der eingangs beschriebenen Art derart zu verbessern, dass diese als reales Gerät, insbesondere in einem Kraftfahrzeug, einsetzbar ist.

Diese Aufgabe wird bei einer Energiespeichereinrichtung der eingangs beschriebenen Art erfindungsgemäß dadurch gelöst, dass ein Kondensatorzellen des Kondensatormoduls aufnehmendes Gehäuse vorgesehen ist, dass das Gehäuse eine die Kondensatorzellen aufnehmende Kondensatorkammer aufweist, dass die Kondensatorkammer druckdicht abgeschlossen ist und dass ein Innendruck der Kondensatorkammer durch einen Drucksensor erfassbar ist.

Dabei umfasst die Energiespeichereinrichtung weiterhin eine Wandlereinheit, die mit dem Kondensatormodul zusammenwirkt und in einer Schaltungskammer in demselben Gehäuse wie die Kondensatorkammer, jedoch außerhalb der Kondensatorkammer angeordnet ist.

Durch den Drucksensor besteht die Möglichkeit, den Innendruck der Kondensatorkammer und damit die Kondensatorzellen zu überwachen. Der Vorteil der erfindungsgemäßen Lösung liegt darin, dass durch die Anordnung der Wandlereinheit außerhalb der Kondensatorkammer etwaige aus den Kondensatorzellen austretende chemische Substanzen die Funktion der Wandlereinheit nicht beeinträchtigen können. Prinzipiell könnte zur Erreichung dieses Effektes die Wandlereinheit in einem separaten Gehäuse vorgesehen sein. Durch die Anordnung der Wandlereinheit in einer Schaltungskammer, die sich in demselben Gehäuse wie die Kondensatorkammer befindet, ist die Lösung für den Einbau in ein Kraftfahrzeug jedoch besonders kompakt. Die vorgeschlagene Lösung erreicht somit eine Kompaktheit der Energiespeichereinrichtung bei einer Trennung der Wandlereinheit von etwaig austretenden chemischen Substanzen.

Kondensatorzellen für Energiespeichereinrichtungen, insbesondere elektrochemische Doppelschichtkondensatorzellen, haben die Eigenschaft, dass diese mit zunehmender Zahl der Entladezyklen und zunehmendem Alter einen internen Gasdruck aufbauen, der aus dem Elektrolyt resultiert.

Daher sind Außengehäuse derartiger Kondensatorzellen mit einer Sollbruchstelle versehen, die dazu führt, dass die Sollbruchstelle zwischen ungefähr 15 und ungefähr 17 Bar bricht und somit das Außengehäuse platzt. Eine derartige Kondensatorzelle ändert nach dem Platzen des Außengehäuses zunächst die elektrischen Eigenschaften nicht, nach einiger Zeit stellt sich jedoch ein Kurzschluss oder eine völlige Unterbrechung ein.

Mit der erfindungsgemäßen Lösung besteht nun die Möglichkeit, das Gesamtverhalten der Kondensatorzellen in der Kondensatorkammer zu überwachen, insbesondere herauszufinden, ob eine der Kondensatorzellen platzt oder geplatzt ist.

Die Überwachung des Drucks in der Kondensatorkammer ist in unterschiedlichster Art und Weise möglich. Beispielsweise wäre es denkbar, einen Absolutdruck in der Kondensatorkammer zu erfassen.

Es ist jedoch vorteilhaft, wenn der Drucksensor eine Druckdifferenz zwischen dem Innendruck der Kondensatorkammer und einem Umgebungsdruck erfasst.

Ein derartiger Umgebungsdruck kann beispielsweise ein Druck eines das Gehäuse der erfindungsgemäßen Energiespeichereinrichtung umgebenden Mediums sein.

Eine besonders vorteilhafte Lösung sieht vor, dass der Drucksensor eine Druckdifferenz zwischen dem Innendruck der Kondensatorkammer und einem Innendruck einer Schaltungskammer der Energiespeichereinrichtung erfasst.

In diesem Fall ist der Innendruck der Schaltungskammer beispielsweise jedoch gleich dem Umgebungsdruck.

Es ist aber auch möglich, den Innendruck der Schaltungskammer als definierten Referenzdruck zu wählen, der sich bei Herstellung der Energiespeichereinrichtung definiert einstellen lässt.
Grundsätzlich weist ein Drucksensor eine auf eine Druckdifferenz reagierende Membran auf, deren Deformation dann erfassbar ist.

Um einen möglichst einfachen Drucksensor herstellen zu können, sieht eine besonders vorteilhafte Lösung vor, dass ein die Kondensatorkammer begrenzender Wandbereich des Gehäuses eine Membran des Drucksensors bildet.

Damit entfällt die Notwendigkeit, eine separate Membran für den Drucksensor herzustellen und so am Gehäuse der Energiespeichereinrichtung anzubringen, dass diese durch den Innendruck der Kondensatorkammer beaufschlagt ist.

Ein Wandbereich des Gehäuses lässt sich in einfacher Weise beispielsweise verdünnt ausführen und somit auch in einfacher Weise herstellen.

Hinsichtlich der Deformation des Wandbereichs sind die unterschiedlichsten Möglichkeiten zur Erfassung derselben denkbar.

Beispielsweise ist es denkbar, mit dem Wandbereich einen eine mechanische Bewegung erfassenden Sensor zu beaufschlagen.

Ein derartiger, eine mechanische Bewegung des Wandbereichs erfassender Sensor könnte beispielsweise in der Kondensatorkammer vorgesehen sein.

Besonders günstig ist es jedoch, wenn der wegerfassende Sensor auf einer der Kondensatorkammer abgewandten Seite des Wandbereichs angeordnet ist.

Ein derartiger wegerfassender Sensor kann in unterschiedlichster Art und Weise ausgebildet sein.

Beispielsweise könnte dieser wegerfassende Sensor ein piezoelektronischer Sensor sein.

Eine besonders vorteilhafte Lösung sieht vor, dass der wegerfassende Sensor als Dehnungsmessstreifen ausgebildet ist.

Um bei einem derartigen Drucksensor reproduzierbare Aussagen über den Innendruck in der Kondensatorkammer zu erhalten, ist vorzugsweise vorgesehen, dass der Drucksensor mit einer Druckmessschaltung verbunden ist.

Da jedoch bei der erfindungsgemäßen Energiespeichereinrichtung primär nicht der Druck in der Kondensatorkammer selbst von Interesse ist, sondern lediglich erfasst werden muss, ob für die Kondensatorzellen charakteristische druckauslösende Ereignisse eingetreten sind oder nicht, ist vorzugsweise vorgesehen, dass die Druckmessschaltung mit einer Druckwarnschaltung verbunden ist, welche nur bei den charakteristischen Ereignissen, die für die Funktionsfähigkeit der erfindungsgemäßen Energiespeichereinrichtung von Bedeutung sind, ein Warnsignal abgibt.

Ein derartiges Warnsignal kann ein bloßes, für eine Bedienungsperson erfassbares Warnsignal sein. Es ist aber auch denkbar, dass ein derartiges Warnsignal zur Abschaltung der Energiespeichereinrichtung führt.

Hinsichtlich der Ausbildung des Gehäuses wurden im Zusammenhang mit der bisherigen Erläuterung der einzelnen Ausführungsformen der erfindungsgemäßen Energiespeichereinrichtung keine näheren Angaben gemacht.

So sieht eine vorteilhafte Lösung vor, dass das Gehäuse eine Gehäuseschale mit einem sich ausgehend von einer Öffnung in die Gehäuseschale hineinerstreckenden Volumen aufweist, welches die Kondensatorkammer zumindest teilweise aufnimmt.

Der Vorteil dieser Lösung ist darin zu sehen, dass damit in einfacher Weise die Möglichkeit besteht, ein gasdichtes Gehäuse zu schaffen.

Noch vorteilhafter ist es, wenn das Volumen die Kondensatorkammer vollständig aufnimmt.

Um die Kondensatorkammer gasdicht abzuschließen, ist vorzugsweise vorgesehen, dass die Öffnung durch einen Deckel gasdicht verschließbar ist.

Ein derartiger gasdichter Verschluss der Öffnung durch einen Deckel lässt sich auf die verschiedenste Weise realisieren.

Beispielsweise wäre es denkbar, zwischen der Gehäuseschale und dem Deckel ein entsprechendes Dichtungsmaterial vorzusehen und den Deckel und die Gehäuseschale relativ zueinander zu verspannen.

Eine besonders zuverlässige Verbindung zwischen dem Deckel und der Gehäuseschale, insbesondere im Hinblick auf die Gasdichtheit, ist jedoch dann realisierbar, wenn der Deckel mit der Gehäuseschale durch Stoffschluss verbindbar ist.

Ein derartiger Stoffschluss ließe sich beispielsweise auch durch Verkleben des Deckels mit der Gehäuseschale realisieren.

Besonders vorteilhaft insbesondere im Hinblick auf die Gasdichtheit ist es jedoch, wenn der Deckel mit der Gehäuseschale verschweißt ist.

Ein derartiges Verschweißen des Deckels und der Gehäuseschale lässt sich vorzugsweise dadurch realisieren, dass die Gehäuseschale oder der Deckel einen zum Herstellen des Stoffschlusses erschmelzbaren Wulstbereich aufweist.

Ein derartiger Wulstbereich aus Material der Gehäuseschale oder des Deckels lässt sich in einfacher Weise erschmelzen um somit die Schweißverbindung herzustellen.

Um insbesondere die Schweißverbindung berührungslos herstellen zu können, ist vorzugsweise vorgesehen, dass der Deckel mit einem Randstreifen den Wulstbereich übergreift und dass der Randstreifen aus einem für Strahlung zum Erschmelzen des Wulstbereichs transparenten Material ist.

Damit lässt sich in einfacher Weise, und zwar durch den Randstreifen hindurch die Schweißverbindung zwischen dem Deckel und der Gehäuseschale herstellen.

Um auch beim Aufbau eines höheren Drucks in der Kondensatorkammer eine Deformation des Gehäuses zu vermeiden ist vorzugsweise vorgesehen, dass der Deckel in einem mittigen Bereich über mindestens ein Verankerungselement mit der Gehäuseschale verbindbar ist. Damit lässt sich eine druckstabilere Verbindung zwischen dem Deckel und der Gehäuseschale herstellen.

Vorzugsweise ist dabei vorgesehen, dass das Verankerungselement ein Schraubanker ist, mit welchem sich in einfacher Weise die Verbindung zwischen dem Deckel und der Gehäuseschale herstellen lässt.

Vorzugsweise ist dabei der Schraubanker derart ausgebildet, dass er den Deckel abgedichtet durchgreift, um auch im Bereich des Schraubankers einen gasdichten Abschluss der Kondensatorkammer sicherzustellen.

Besonders günstig ist es, wenn in der Kondensatorkammer ein Sorptionsmaterial für aus den Kondensatorzellen austretende chemische Substanzen angeordnet ist. Ein derartiges Sorptionsmaterial erlaubt es, die aus den Kondensatorzellen austretenden chemischen Substanzen entweder durch Absorption oder Adsorption aufzunehmen und somit zu binden.

Derartige Sorptionsmaterialien können in unterschiedlichster Art und Weise ausgebildet sein.

Eine vorteilhafte Lösung sieht vor, dass das Sorptionsmaterial auf der Basis eines organischen Polymers hergestellt ist.

Besonders vorteilhaft ist es dabei, wenn das Sorptionsmaterial Teil eines in der Kondensatorkammer vorgesehenen Füllmaterials ist.

Ein derartiges Füllmaterial kann entweder beliebig in der Kondensatorkammer um die Kondensatorzellen herum verteilt sein.

Eine vorteilhafte Lösung sieht dabei vor, dass das Füllmaterial in Form eines Füllmaterialpolsters vorgesehen ist.

Vorzugsweise ist ein derartiges Füllmaterialpolster zwischen den Kondensatorzellen und einer Wand des Gehäuses angeordnet.

Um eine geeignete Verbindung zwischen dem Kondensatormodul in der Kondensatorkammer und der Wandlereinheit zu schaffen, ist vorzugsweise vorgesehen, dass der Kondensatormodul über Hochstromkontakte mit der Wandlereinheit verbunden ist, so dass diese Kontakte in der Lage sind, große Ströme aus dem Kondensatormodul abzuziehen, insbesondere für den Ausgleich extremer Belastungen in dem Stromversorgungsnetz.

Um in jedem Fall die hermetische Isolierung der Kondensatorzellen in der Kondensatorkammer sicherzustellen, ist vorzugsweise auch vorgesehen, dass die Hochstromkontakte gasdicht aus der Kondensatorkammer herausgeführt sind.

Insbesondere ist dabei vorgesehen, dass die Hochstromkontakte gasdicht durch eine Wand des die Kondensatorkammer umschließenden Teils des Gehäuses hindurchgeführt sind.

Insbesondere ist es günstig, wenn die Hochstromkontakte durch eine die Schaltungskammer von der Kondensatorkammer trennende Wand hindurchgeführt sind.

Um in einfacher Weise eine raumsparende Verbindung zwischen den Kondensatorzellen in der Kondensatorkammer und der Wandlereinheit herstellen zu können, ist vorzugsweise vorgesehen, dass sich an die Kondensatorkammer eine Kontaktkammer anschließt, in welcher eine Verbindung mit Hochstromkontakten herstellbar ist, welche eine Wand der Kontaktkammer gasdicht durchsetzen.

Insbesondere ist dabei die von den Hochstromkontakten durchsetzte Wand zumindest Teil einer Trennwand zwischen der Kontaktkammer und einer Schaltungskammer des Gehäuses, die von der Kontaktkammer und der Kondensatorkammer hermetisch getrennt ist.

Vorzugsweise ist dabei die Schaltungskammer in demselben Gehäuse angeordnet, welches auch die Kondensatorkammer aufnimmt, ist jedoch von der Kondensatorkammer und der Kontaktkammer vollständig abgetrennt.

Weitere Merkmale und Vorteile der Erfindung sind Gegenstand der nachfolgenden Beschreibung sowie der zeichnerischen Darstellung eines Ausführungsbeispiels.

In der Zeichnung zeigen:

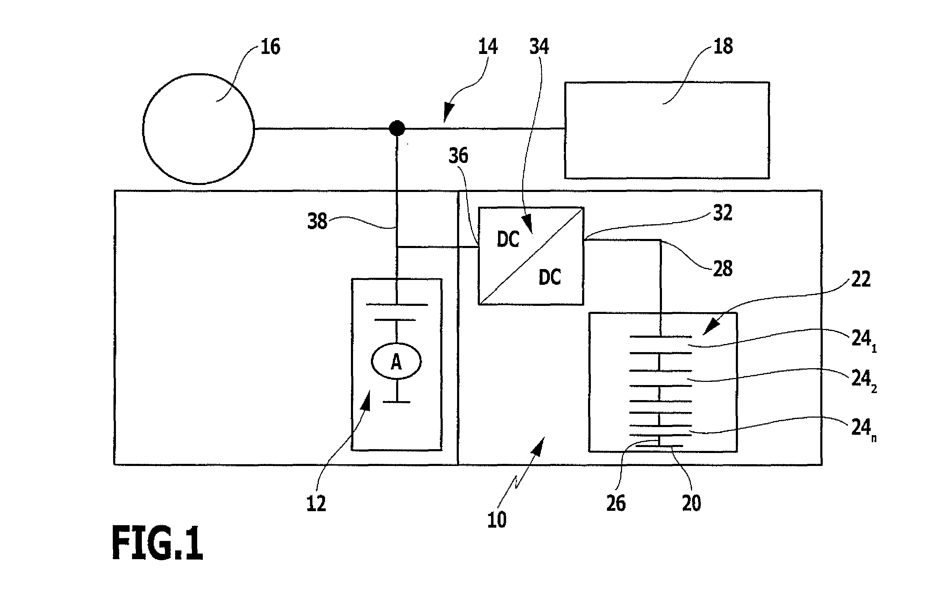

- Fig. 1: ein Schema einer erfindungsgemäßen Energiespeichereinrichtung;
- Fig.2: einen Längsschnitt längs Linie 2-2 in Fig. 3 bei zusammengebautem Gehäuse;
- Fig.3: eine Explosionsdarstellung einer erfindungsgemäßen Energiespeichereinrichtung mit einem Gehäuse und abgenommenem bodenseitigen Deckel;
- Fig.4: einen Schnitt längs Linie 4-4 in Fig. 3;
- Fig.5: eine vergrößerte Darstellung eines Bereichs A in Fig. 4;
- Fig.6: einen Schnitt längs Linie 6-6 in Fig. 3 und
- Fig.7: eine vergrößerte Darstellung eines Bereichs B in Fig. 6.

Ein Ausführungsbeispiel einer erfindungsgemäßen Energiespeichereinrichtung 10, ist beispielsweise ergänzend zu einer Batterie 12 in einem Stromversorgungsnetz 14 eines Kraftfahrzeugs angeordnet, das zusätzlich zu der Batterie 12 und der Energiespeichereinheit 10 beispielsweise noch einen Generator 16 sowie eine Vielzahl von Verbrauchern 18 aufweist, die alle zwischen dem Stromversorgungsnetz 14 und Masse 20 liegen.

Die Energiespeichereinheit 10 umfasst einen Kondensatormodul 22, welcher aus einer Vielzahl von in Reihe geschalteten Kondensatorzellen 24 aus elektrochemischen Doppelschichtkondensatorzellen aufweist.

Der Kondensatormodul 22 liegt beispielsweise mit einem ersten Anschluss 26 auf Masse 20 und ist mit einem zweiten Anschluss 28 mit einem Ausgang 32 einer DC/DC-Wandlereinheit 34 verbunden, deren Eingang 36 mit einer Versorgungsleitung 38 des Stromversorgungsnetzes 14 verbunden ist, die beispielsweise auf einer Spannung zwischen ungefähr 8 und ungefähr 14 Volt liegen kann.

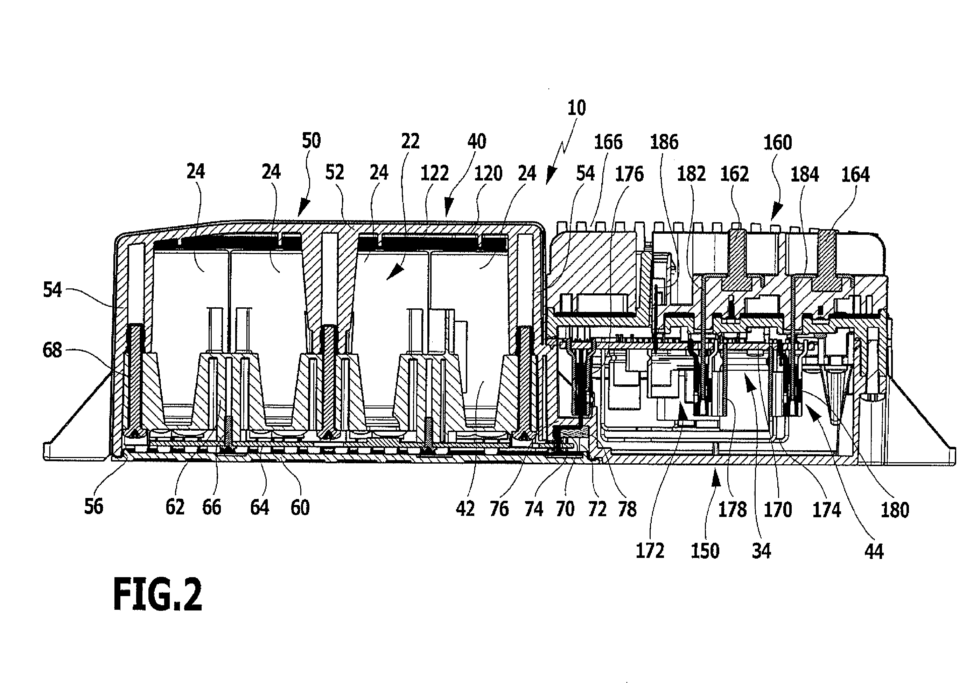

Wie in Fig. 2 dargestellt, ist die Energiespeichereinheit 10 in einem Gehäuse 40 angeordnet, welches einerseits eine Kondensatorkammer 42 zur Aufnahme der gesamten Kondensatorzellen 24 des Kondensatormoduls 22 aufweist und andererseits eine Schaltungskammer 44, in welcher die gesamte elektronische Schaltung der Wandlereinheit 34 und gegebenenfalls noch weitere Schaltungen weiterer Einheiten angeordnet sind.

Die Kondensatorkammer 42 und die Schaltungskammer 44 sind dabei hermetisch voneinander getrennt, um in der Kondensatorkammer 42 optimale Bedingungen für die Kondensatorzellen 24 zu schaffen, die unabhängig von den Bedingungen gewählt werden können, welche in der Schaltungskammer 44 für die elektrische Schaltung vorliegen.

Zur Ausbildung der druckfesten Kondensatorkammer 42 weist das Gehäuse 40 eine Gehäuseschale 50 auf, welche einen Deckel 52 und Seitenwände 54 umfasst, die sich bis zu einer Öffnung 56 der Gehäuseschale 50 erstrecken, wobei die Öffnung 56 der Gehäuseschale 50 durch einen dem Deckel 52 gegenüberliegenden bodenseitigen Deckel 60 verschließbar ist.

Die einzelnen Kondensatorzellen 24 werden in der Kondensatorkammer 42 einerseits durch einen Kondensatorhalter 62 und andererseits durch eine Kondensatorleiterplatte 64 relativ zueinander fixiert, wobei der Kondensatorhalter 62 und die Kondensatorleiterplatte 64 relativ zueinander durch Halteelemente 66, beispielsweise Schrauben, fixiert sind und andererseits der Kondensatorhalter 62 durch Halteelemente 68, beispielsweise ebenfalls Schrauben, in der Gehäuseschale 50 fixiert ist.

Die Kondensatorzellen 24 sind mit dem Kondensatorhalter 62 und der Kondensatorleiterplatte 64 so in die Gehäuseschale 50 eingesetzt, dass die Kondensatorleiterplatte 64 dem bodenseitigen Deckel 60 zugewandt ist und nahe desselben verläuft.

Die Kondensatorleiterplatte 64 trägt dabei die elektrischen Leiterbahnen zur Verschaltung der Kondensatorzellen 24 und stellt eine Verbindung mit Hochstromkontakten 70 her, welche in einer sich an die Kondensatorkammer 42 anschließenden und mit dieser verbundenen und in der Gehäusehalle 50 ebenfalls vorgesehenen Kontaktkammer 72 angeordnet sind, in welche sich die Kondensatorleiterplatte 64 mit einem Kontaktbereich 74 hinein erstreckt, so dass in den Kontaktbereich 74 hineinführende Leiterbahnen mit den Hochstromkontakten 70, beispielsweise durch Löten, verbindbar sind.

Die Hochstromkontakte 70 durchsetzen eine die Kontaktkammer 72 von der Schaltungskammer 44 trennende Wand 76, wobei sie vorzugsweise in diese eingespritzt sind, und zusätzlich sind die Hochstromkontakte 70 noch in eine die Wand 76 überdeckende Vergussmasse 78 eingebettet, um die Hochstromkontakte 70 gasdicht durch die Wand 76 hindurchführen zu können.

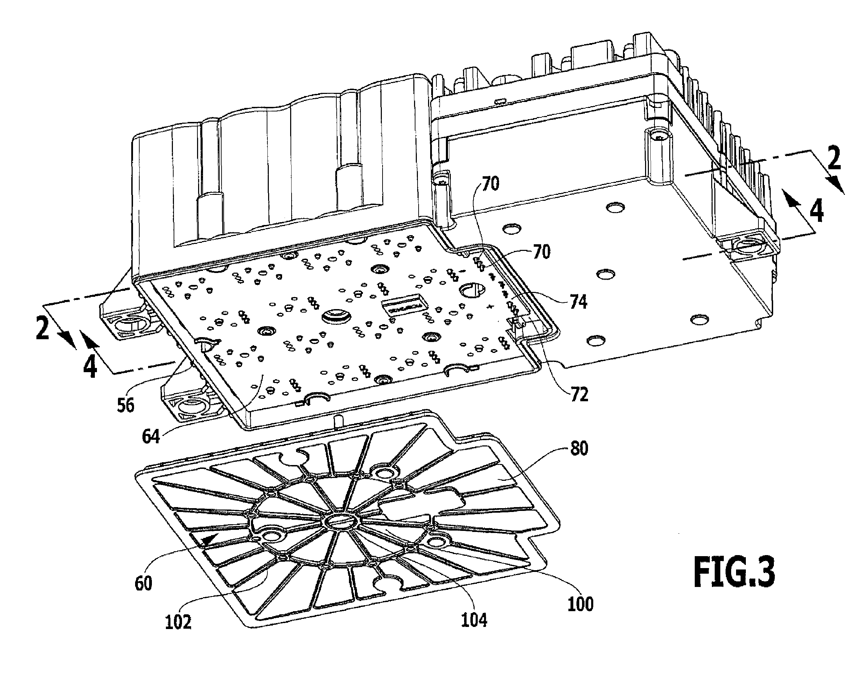

Wie in Fig. 3 dargestellt, erstreckt sich der bodenseitige Deckel 60 zum Verschluss der Kondensatorkammer 42 nicht nur über diese, sondern auch noch mit einem Deckelansatz 80 über die Kontaktkammer 72, um beide gemeinsam zu verschließen, wobei die Öffnung 56 der Gehäuseschale 50 auch um die Kontaktkammer 72 herum verläuft.

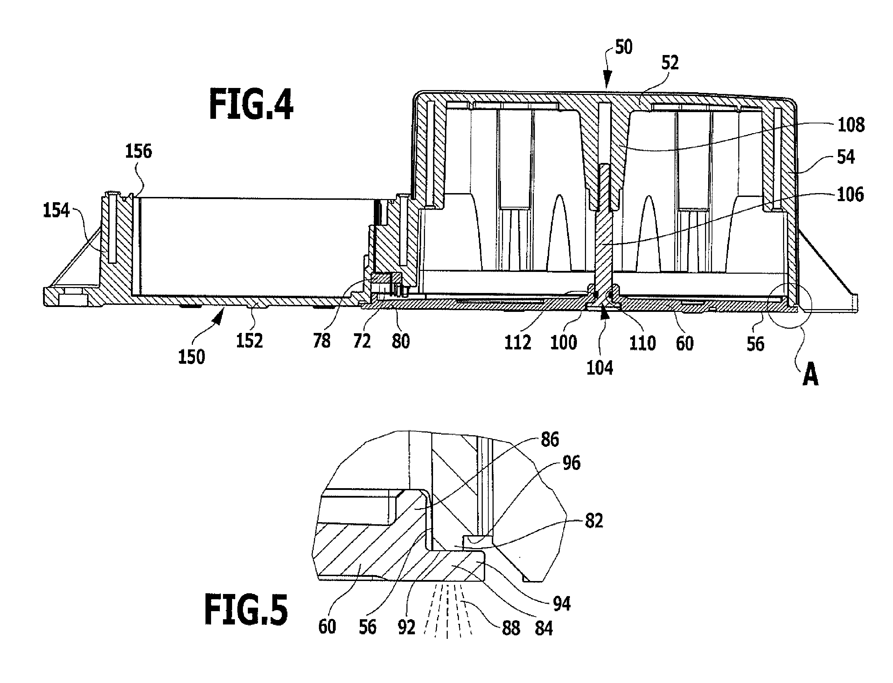

Wie in Fig. 4 und Fig. 5 im Detail dargestellt, verläuft entlang der Öffnung 56 und um diese herum ein Wulstbereich 82 und sowohl der bodenseitige Deckel 60 als auch der Deckelansatz 80 übergreifen den Wulstbereich 82 mit einem 5 Randstreifen 84, der seitlich nach außen über einen in die Öffnung 56 eingreifenden Führungssteg 86 übersteht, der den Deckel 60 sowie den Deckelansatz 80 relativ zur Öffnung 56 in Richtung einer Flächenausdehnung des Deckels 60 mit dem Deckelansatz 80 relativ zur Gehäuseschale 50 beim Einsetzen führt.

Vorzugsweise sind entweder der Deckel 60 mit dem Deckelansatz 80 oder zumindest der Randstreifen 84 für einfallende energiereiche Strahlung 88, beispielsweise Laserstrahlung, transparent ausgebildet, so dass mit der energiereichen Strahlung 88, die durch den Randstreifen 84 hindurchtritt, der Wulstbereich 82 erschmelzbar ist, um somit zwischen dem Wulstbereich 82 und dem Randstreifen 84 eine stoffschlüssige Verbindung herzustellen.

Vorzugsweise erstreckt sich der Randstreifen 84 noch über einen Materialaufschmelzbereich 92 mit einem Außenrand 94 hinaus und der Wulstbereich 82 erhebt sich über einen auf einer der Öffnung 56 gegenüberliegenden Seite des Wulstbereichs 82 umlaufenden Stützrand 96, so dass bei Erschmelzen des Wulstbereichs 82 im Materialaufschmelzbereich 92 der Deckel 60 mit dem Deckelansatz 80 soweit aufgedrückt werden kann, bis der Außenrand 94 auf dem Stützrand 96 aufliegt.

Durch die sich im Materialaufschmelzbereich 92 ergebende stoffschlüssige Verbindung zwischen dem bodenseitigen Deckel 60 und dem Deckelansatz 80 ist eine stabile, gegebenenfalls für mehrere Bar gegenüber Umgebungsdruck druckfeste Verbindung zwischen diesen und der Gehäuseschale 50 herstellbar, die allerdings beim Aufbau eines Innendrucks in der Kondensatorkammer 42 und der Kontaktkammer 72 ein Aufwölben eines mittigen Bereichs 100 des Deckels 60 nicht verhindern kann.

Aus diesem Grund ist der Deckel 60 noch mit Versteifungsrippen 102 versehen, die von dem Randstreifen 84 zum mittigen Bereich 100 hin verlaufen, insbesondere, wie in Fig. 3 dargestellt, zu einem Verankerungselement 104 hin verlaufen und sich beispielsweise radial zu dem Verankerungselement 104 über die Ausdehnung des Deckels 60 erstrecken.

Das Verankerungselement 104 ist, wie in Fig. 4 dargestellt, durch einen Schraubanker 106 gebildet, der in eine Aufnahme 108 der Gehäuseschale 50 einschraubbar ist, wobei die Aufnahme 108 beispielsweise an den oberen Deckel 52 der Gehäuseschale 50 angeformt ist.

Der Schraubanker 106 durchsetzt einen Durchbruch 110, der im mittigen Bereich 100 des Deckels 60 vorgesehen ist, und ist gegenüber dem Durchbruch 110 mit einer Dichtung 112 abgedichtet, um somit ebenfalls im Bereich des Schraubankers 106 sicherzustellen, dass die Kondensatorkammer 42 gegenüber der Umgebung druckdicht abgeschlossen ist.

Beim Einsatz von elektrochemischen Doppelschichtkondensatoren als Kondensatorzellen 24 erfolgt aufgrund von Alterungseffekten in den Kondensatorzellen 24 eine interne Druckerhöhung und ein Außengehäuse der Kondensatorzellen ist so konzipiert, dass dieses nach Überschreiten eines vorgegebenen Druckniveaus definiert reißt. In diesem Fall tritt aus den Kondensatorzellen 24 Acetonitril aus und dieses Acetonitril kann bei geeigneter Ausbildung des Füllmaterials 122 von diesem aufgenommen werden.

In der druckdicht abgeschlossenen Kondensatorkammer 42 ist zwischen dem Deckel 52 und den diesem zugewandten Seiten der Kondensatorzellen 24 ein Zwischenraum 120 vorgesehen, in welchem ein Füllmaterial 122 angeordnet ist, das elastisch ausgebildet ist und somit Volumenausdehnungen der Kondensatorzellen 24 kompensieren kann. Darüber hinaus ist das Füllmaterial 122 aber auch mit einem Sorptionsmaterial für aus den Kondensatorzellen 24 austretende chemische Substanzen versehen.

Beispielsweise ist das Füllmaterial 122 mit organischen Polymeren als Sorptionsmaterial 124 versehen, welche durch Sorption, das heißt Absorption und Adsorption, das aus den Kondensatorzellen 24 austretende Acetonitril sorbieren, wobei die Auswahl der Materialien nicht nur hinsichtlich eines guten Absorptionsverhaltens und eines guten Adsorptionsverhaltens erfolgt, sondern auch hinsichtlich eines möglichst günstigen Desorptionsverhaltens, um die Freisetzung von einmal absorbiertem oder adsorbiertem Acetonitril möglichst gering zu halten.

Für einen einfachen Zusammenbau der Energiespeichereinrichtung ist es günstig, wenn das mit dem Sorptionsmaterial 124 versehene Füllmaterial 122 in Form eines Füllmaterialpolsters 126 zwischen dem Deckel 52 und den Kondensatorzellen 24 angeordnet ist.

Die Schaltungskammer 44 wird gebildet durch eine einstückig an die erste Gehäuseschale 50 angeformte zweite Gehäuseschale 150, die, wie in Fig. 2, 3 und 4 dargestellt, einen bodenseitigen Deckel 152 aufweist, von welchem sich Seitenwände 154 erheben, die bis zu einer Öffnung 156 reichen, welche durch eine Deckeleinheit 160 verschließbar ist, wobei die Deckeleinheit 160 einerseits Hochstromanschlüsse 162 und 164 und andererseits Kühlrippen 166 aufweist, wobei die Kühlrippen 166 zur Kühlung von Leistungsbauteilen der Wandlereinheit 34 dienen.

Die Wandlereinheit 34 weist ihrerseits eine auf einer Schaltungsplatine 170 angeordnete Wandlerschaltung 172 auf, welche die Leistungsbauteile umfasst, die durch die Kühlrippen 166 kühlbar sind.

Darüber hinaus sind Hochstrompfade der Wandlerschaltung 172 durch Stanzgitter 174 realisiert, welche die hohen Ströme führen.

Zur Verbindung der Schaltungsplatine 170 mit den Hochstromkontakten 70 ist die Schaltungsplatine 170 mit Steckkontakten 176 versehen, welche auf die in den Schaltungsraum 44 hineinragenden Teile der Hochstromkontakte 70 aufsteckbar sind und andererseits ist die Schaltungsplatine 170 mit weiteren Steckkontakten 178, 180 versehen, in welche zu den Hochstromanschlüssen 162 und 164 führende Kontaktbügel 182, 184 einsteckbar sind, wobei die Kontaktbügel 182 und 184 in der Deckeleinheit 160 verankert, vorzugsweise in diese eingelassen sind.

Ferner sind in der Deckeleinheit 160 noch Steuerkontakte 186 vorgesehen, welche ebenfalls mit der Schaltungsplatine 170 verbunden sind, um der Wandlerschaltung 172 Steuersignale von externen Steuergeräten zuführen zu können.

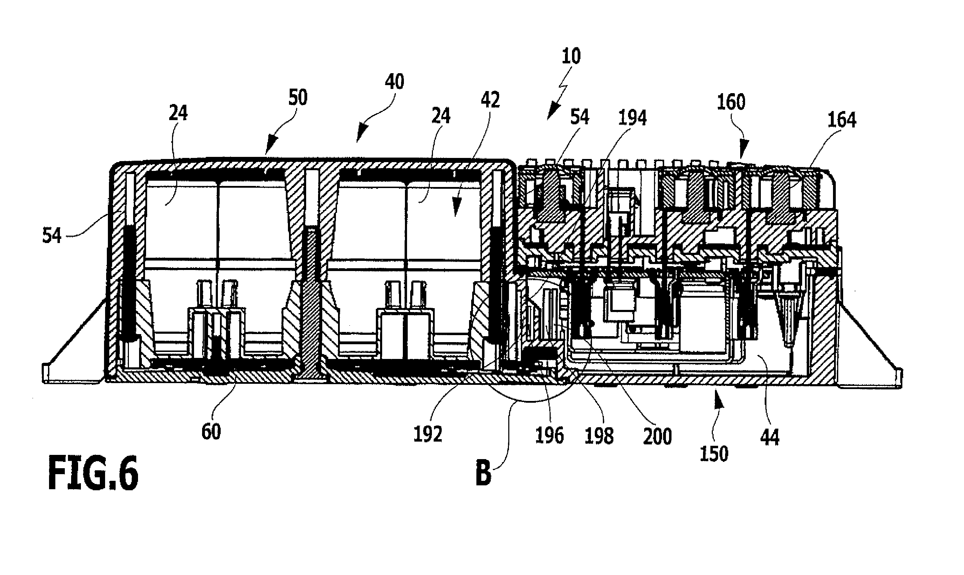

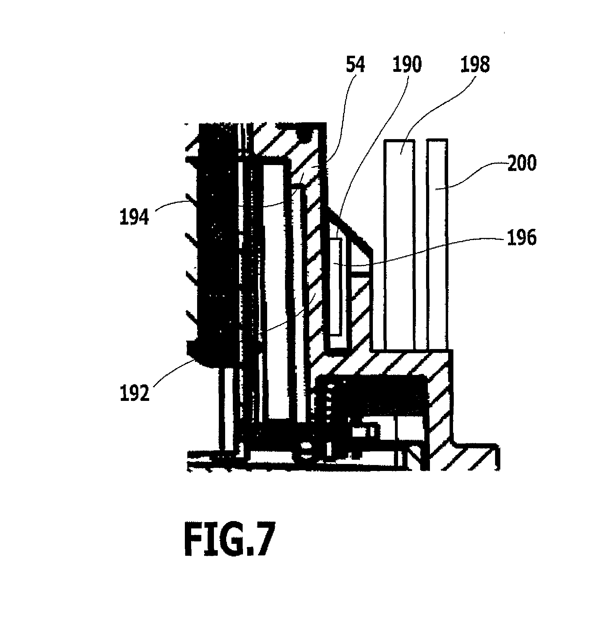

Zur Erfassung des Drucks in der druckdicht abgeschlossenen Kondensatorkammer 42 ist, wie in Fig. 6 und 7 dargestellt, ein als Ganzes mit 190 bezeichneter Drucksensor vorgesehen, mit welchem der Druck in der Kondensatorkammer 42 erfassbar ist.

Der Drucksensor 190 wird dabei gebildet durch einen eine Membran bildenden Wandbereich 192, welcher zumindest Teil der Gehäuseschale 50 ist, im dargestellten Ausführungsbeispiel sogar Teil der Gehäuseschale 50 und der Gehäuseschale 150 ist, und an einer Trennwand 194 zwischen der Kondensatorkammer 42 und der Schaltungskammer 44 angeordnet ist, die Teil der beiden Gehäuseschalen 50, 150 ist, und ferner noch durch einen auf dem Wandbereich 192 angeordneten Dehnungsmessstreifen 196, mit welchem eine membranartige Deformation des Wandbereichs 192 erfassbar ist.

Um nun mittels des Dehnungsmessstreifens 196 Formänderungen des Wandbereiches 192 einem Innendruck in der Kondensatorkammer 42 zuordnen zu können, ist der Dehnungsmessstreifen 196 mit einer Druckmessschaltung 198 verbunden, welche den von dem Dehnungsmessstreifen 196 erfassten Deformationen einen Innendruck in der Kondensatorkammer 42 zuordnet.

Hierzu ist beispielsweise die Druckmessschaltung 198 mit einer abgelegten Tabelle versehen, welche die Korrelation zwischen der Deformation des Wandbereichs 192 und dem Innendruck in der Kondensatorkammer 42 abgespeichert hat.

Selbst wenn der Wandbereich 192 keine exakt den Veränderungen des Innendrucks in der Kondensatorkammer 42 folgende Membran darstellt, so ist das Verhalten des Wandbereichs 192, erfasst durch den Dehnungsmessstreifen 196, ausreichend, um plötzliche Druckänderungen in der Kondensatorkammer 42 zu erfassen.

Beispielsweise ist es möglich, ein Platzen einer der Kondensatorzellen 24 durch einen plötzlichen Druckanstieg des Innendrucks der Kondensatorkammer 42 zu erkennen.

Im Fall eines derartigen, durch die Druckmessschaltung 198 ebenfalls erkannten, einem Platzen einer der Kondensatorzellen 24 zugeordneten Druckanstiegs besteht die Möglichkeit, mit einer mit der Druckmessschaltung 198 gekoppelten Druckwarnschaltung 200 ein Signal an die Wandlerschaltung 172 weiterzugeben, welches diese dazu veranlasst, die Energiespeichereinheit 10 außer Betrieb zu setzen, da durch den Druckanstieg das Platzen der Kondensatorzelle 24 erfasst werden kann, das dann nach absehbarer Zeit zu einem Ausfall der gegebenenfalls zunächst beim Platzen noch funktionsfähigen Kondensatorzelle 24 führt.

Außerdem hat die erfindungsgemäße Lösung noch den Vorteil, dass dadurch, dass der Dehnungsmessstreifen 196 und die Druckmessschaltung 198 in der Schaltungskammer 44 liegen, auch das Austreten von Acetonitril aus der geplatzten Kondensatorzelle 24 unproblematisch ist, da dieses in der druckdicht verschlossenen Kondensatorkammer 42 verbleibt.

Dadurch, dass der Wandbereich 192 zwischen der Kondensatorkammer 42 und der Schaltungskammer 44 als Membran des Drucksensors 190 eingesetzt ist, ergibt sich der Vorteil, dass eine Relativmessung des Drucks in der Kondensatorkammer 42 zu dem Druck in der Schaltungskammer 44 erfolgen kann, wobei die Schaltungskammer 44 beispielsweise auf Umgebungsdruck gehalten wird, während die Kondensatorkammer 42 druckdicht abgeschlossen ist, so dass sich Veränderungen der Kondensatorzellen 24 in einfacher Weise erkennen lassen.

Bei ausreichend großer Empfindlichkeit des Drucksensors 130, das heißt bei ausreichend dünn ausgebildetem Wandbereich 192 besteht auch die Möglichkeit, insgesamt einen Druckanstieg des Innendrucks in der Kondensatorkammer 42 zu erfassen und damit Rückschlüsse auf den Zustand der Kondensatorzellen 24 insgesamt zu ziehen.

Eine besonders vorteilhafte Ausführungsform sieht vor, dass, wie in Fig. 7 dargestellt, der Druckmessschaltung 198 noch eine Druckwarnschaltung 200 zugeordnet ist, die so ausgebildet ist, dass sie, je nach dem von der Druckmessschaltung 198 erfassten Druckanstieg zwischen verschiedenen Szenarien in der Kondensatorkammer 42 zu unterscheiden und entsprechend der Problematik des Szenarios in der Kondensatorkammer 42 die Energiespeichereinheit 10 außer Betrieb zu nehmen oder gegebenenfalls zunächst weiterzubetreiben.

## Patentansprüche

1. Energiespeichereinrichtung (10) umfassend
ein Kondensatorzellen (24) eines Kodensatormoduls (22) aufnehmendes Gehäuse (40), wobei das Gehäuse (40) eine die Kondensatorzellen (24) aufnehmende Kondensatorkammer (42) aufweist, die Kondensatorkammer (42) druckdicht abgeschlossen ist und ein Innendruck der Kondensatorkammer (42) durch einen Drucksensor (190) erfassbar ist, **dadurch gekennzeichnet, dass** die Energiespeichereinrichtung weiterhin eine Wandlereinheit (34) umfasst, die mit dem Kondensatormodul (22) zusammenwirkt und in einer Schaltungskammer (44) in demselben Gehäuse (40) außerhalb der Kondensatorkammer (42) angeordnet ist.

2. Energiespeichereinrichtung nach Anspruch 1, **dadurch gekennzeichnet, dass** der Drucksensor (190) eine Druckdifferenz zwischen dem Innendruck der Kondensatorkammer (42) und einem Innendruck der Schaltungskammer (44) erfasst.

3. Energiespeichereinrichtung nach Anspruch 2, **dadurch gekennzeichnet, dass** der Drucksensor (190) eine Druckdifferenz zwischen einem Innendruck der Kondensatorkammer (42) und einem Umgebungsdruck erfasst.

4. Energiespeichereinrichtung nach Anspruch 1 oder 2, **dadurch gekennzeichnet, dass** ein die Kondensatorkammer (42) begrenzender Wandbereich (192) des Gehäuses (40) eine Membran des Drucksensors (190) bildet.

5. Energiespeichereinrichtung nach Anspruch 4, **dadurch gekennzeichnet, dass** der Wandbereich (192) mit einem wegerfassenden Sensor (196) versehen ist.

6. Energiespeichereinrichtung nach Anspruch 5, **dadurch gekennzeichnet, dass** der wegerfassende Sensor (196) auf einer der Kondensatorkammer (42) abgewandten Seite des Wandbereichs (192) angeordnet ist.

7. Energiespeichereinrichtung nach Anspruch 5 oder 6, **dadurch gekennzeichnet, dass** der wegerfassende Sensor ein Dehnungsmessstreifen (196) ist.

8. Energiespeichereinrichtung nach einem der voranstehenden Ansprüche, **dadurch gekennzeichnet, dass** der Drucksensor (190) mit einer Druckmessschaltung (198) verbunden ist.

9. Energiespeichereinrichtung nach Anspruch 8, **dadurch gekennzeichnet, dass** die Druckmessschaltung (198) mit einer Druckwarnschaltung (200) verbunden ist.

10. Energiespeichereinrichtung nach einem der voranstehenden Ansprüche, **dadurch gekennzeichnet, dass** das Gehäuse (40) eine Gehäuseschale (50) mit einem sich ausgehend von einer Öffnung (56) in die Gehäuseschale (50) hineinerstreckenden Volumen aufweist, welches die Kondensatorkammer (42) zumindest teilweise aufnimmt.

11. Energiespeichereinrichtung nach Anspruch 10, **dadurch gekennzeichnet, dass** das Volumen die Kondensatorkammer (42) vollständig aufnimmt.

12. Energiespeichereinrichtung nach Anspruch 10 oder 11, **dadurch gekennzeichnet, dass** die Öffnung (56) durch einen Deckel (60) gasdicht verschließbar ist.

13. Energiespeichereinrichtung nach einem der Ansprüche 10 bis 12, **dadurch gekennzeichnet, dass** der Deckel (60) mit der Gehäuseschale (50) durch Stoffschluss druckdicht verbindbar ist.

14. Energiespeichereinrichtung nach Anspruch 13, **dadurch gekennzeichnet, dass** der Deckel (60) mit der Gehäuseschale (50) verschweißt ist.

15. Energiespeichereinrichtung nach Anspruch 13 oder 14, **dadurch gekennzeichnet, dass** die Gehäuseschale (50) oder der Deckel (60) einen zum Herstellen des Stoffschlusses erschmelzbaren Wulstbereich (82) aufweist.

16. Energiespeichereinrichtung nach einem der voranstehenden Ansprüche, **dadurch gekennzeichnet, dass** der Deckel (60) in einem mittigen Bereich (100) über mindestens ein Verankerungselement (104) mit der Gehäuseschale (50) verbindbar ist.

17. Energiespeichereinrichtung nach Anspruch 16, **dadurch gekennzeichnet, dass** das Verankerungselement (104) ein Schraubanker (106) ist.

18. Energiespeichereinrichtung nach Anspruch 17, **dadurch gekennzeichnet, dass** der Schraubanker (106) den Deckel (60) abgedichtet durchgreift.

19. Energiespeichereinrichtung nach einem der voranstehenden Ansprüche, **dadurch gekennzeichnet, dass** der Wandbereich (192) in einer Trennwand (194) zwischen der Kondensatorkammer (42) und der Schaltungskammer (44) angeordnet ist.
